# EUROPEAN PATENT APPLICATION

(11) **EP 4 481 515 A1**
(43) Date of publication of application: **25.12.2024**
(21) Application number: 24170453.5
(22) Date of filing: 16.04.2024
(51) Int. Cl.: G05B 17/02, G05B 19/418

(54) **METHODS, APPARATUSES, AND COMPUTER PROGRAM PRODUCTS FOR AUTOMATIC GENERATION OF ASSET MODELS**

(30) Priority: 21.06.2023 US 202318212520
(71) Applicant: Honeywell International Inc., Charlotte, NC 28202 (US)
(72) Inventor: GOODMAN, John, Charlotte, 28202 (US); PEDNEKAR, Abhishek, Charlotte, 28202 (US); KARPURMATH, Vijayamahantesh, Charlotte, 28202 (US); KALYANASUNDARAM, Palavesh, Charlotte, 28202 (US)
(74) Representative: Haseltine Lake Kempner LLP

(57) **Abstract**

Methods, apparatuses, and computer program products for generating an asset model that digitally represents one or more assets of a process or subprocess within an industrial environment are provided. The computer-implemented method includes receiving a flowsheet defining the process or subprocess within the industrial environment and the one or more assets of the process, receiving a process flow table comprising all or a subset of the one or more assets from the flowsheet to be included in the asset model, and automatically generating a process simulation model and an associated process simulation model database from the process flow table using one or more predefined attributes for each of one or more predefined calculations. A process digital twin system may be automatically generated and rendered on a display.

## Description

### CROSS-REFERENCE TO RELATED APPLICATIONS

This application claims priority to and the benefit of foreign India Patent Application Serial No. 202311032082, filed on May 5, 2023 and entitled "Methods, Apparatuses, and Computer Program Products for Automatic Generation of Asset Models," which is incorporated herein by reference in its entirety.

### TECHNOLOGICAL FIELD

The present disclosure generally relates to process simulation systems related to industrial assets in an industrial environment, and more particularly to automatic generation of asset models within a process simulation system.

### BACKGROUND

An industrial environment generally includes physical assets such machines, sensors, equipment, computing devices, and/or other types of industrial assets configured to execute one or more industrial processes. Process simulation tools, such as asset models and process digital twin systems, are often used to model and/or monitor such industrial environments.

However, Applicant has discovered many technological inefficiencies related to the creations of such traditional asset models.

### BRIEF SUMMARY

The details of some embodiments of the subject matter described in this specification are set forth in the accompanying drawings and the description below. Other features, aspects, and advantages of the subject matter will become apparent from the description, the drawings, and the claims.

In accordance with a first aspect of the disclosure, a computer-implemented method for generating an asset model that digitally represents one or more assets of a process or subprocess within an industrial environment is provided. In at least one example embodiment, an example method comprises receiving a flowsheet defining the process or subprocess within the industrial environment and the one or more assets of the process, each asset having an asset type, receiving a process flow table comprising all or a subset of the one or more assets from the flowsheet to be included in the asset model, and automatically generating a process simulation model and an associated process simulation model database from the process flow table using one or more predefined attributes for each of one or more predefined calculations.

In some embodiments, the example method comprises automatically generating a process digital twin system from the process simulation model database and rendering the process digital twin system to at least one display.

In some embodiments, the one or more assets of the process or subprocess include equipment, streams, measurement instruments, calculated values, inputs and/or outputs.

In some embodiments, the flowsheet comprises a plurality of variables, the plurality of variables comprise measured values, calculated values, parameters, and/or specifications, and the plurality of variables comprise associated engineering units for one or more of the measured values, calculated values, parameters, and/or specifications.

In some embodiments, at least some of the one or more predefined attributes enable preprocessing calculations, postprocessing calculations, storing inputs to the preprocessing and/or postprocessing calculations, storing results from the preprocessing and/or postprocessing calculations, measurement values from the industrial environment, parameter values to support the preprocessing and/or postprocessing calculations, and/or simulation results.

In some embodiments, the simulation results include validity checking.

In some embodiments, the process simulation model database is a time-series database comprising values for at least some of the one or more attributes at a plurality of different times.

In some embodiments, the flowsheet comprises an engineering design flowsheet or a training flowsheet.

In accordance with another aspect of the disclosure, an apparatus for generating an asset model that digitally represents one or more assets of a process or subprocess within an industrial environment is provided. The apparatus comprises at least one processor and at least one non-transitory memory comprising program code. The at least one non-transitory memory and the program code are configured to, with the at least one processor, cause the apparatus to at least receive a flowsheet defining the process or subprocess within the industrial environment and the one or more assets of the process, each asset having an asset type, receive a process flow table comprising all or a subset of the one or more assets from the flowsheet to be included in the asset model, and automatically generate a process simulation model and an associated process simulation model database from the process flow table using one or more predefined attributes for each of one or more predefined calculations.

In accordance with yet another aspect of the disclosure, an example computer program product is provided. The example computer program product includes at least one non-transitory computer-readable storage medium having computer-readable program code portions stored therein, the computer-readable program code portions comprising an executable portion configured to at least receive a flowsheet defining the process or subprocess within the industrial environment and the one or more assets of the process, each asset having an asset type, receive a process flow table comprising all or a subset of the one or more assets from the flowsheet to be included in the asset model, and automatically generate a process simulation model and an associated process simulation model database from the process flow table using one or more predefined attributes for each of one or more predefined calculations.

### BRIEF DESCRIPTION OF THE SEVERAL VIEWS OF THE DRAWINGS

Having thus described the embodiments of the disclosure in general terms, reference now will be made to the accompanying drawings, which are not necessarily drawn to scale, and wherein:
FIG. 1 illustrates a block diagram of a system that may be specially configured within which embodiments of the present disclosure may operate;
FIG. 2 illustrates a block diagram of an example apparatus that may be specially configured in accordance with an example embodiment of the present disclosure;
FIG. 3 illustrates a flow chart for automatically generating an asset model within a process simulation system, in accordance with an example embodiment of the present disclosure;
FIG. 4 illustrates a flowsheet of an industrial process for which an asset model may be automatically created, in accordance with an example embodiment of the present disclosure;
FIG. 5 illustrates an example graphical process flow diagram PFD representation of the flowsheet of FIG. 4 rendered in the Process Digital Twin process;
FIGS. 6A and 6B illustrate views of an example data book of the flowsheet of FIG. 4;
FIG. 7A illustrates an example input process data table of the flowsheet of FIG. 4;
FIG. 7B illustrates an example output process data table of the flowsheet of FIG. 4;
FIGS. 8A-8E illustrate example definitions for predefined calculations for a process simulation model, in accordance with an example embodiment of the present disclosure; and
FIGS. 9A-9C illustrate representations of portions of a time-series database for an automatically generated process simulation model, in accordance with an example embodiment of the present disclosure.

### DETAILED DESCRIPTION

Embodiments of the present disclosure now will be described more fully hereinafter with reference to the accompanying drawings, in which some, but not all, embodiments of the disclosure are shown. Many modifications and other embodiments of the disclosure set forth herein will come to mind to one skilled in the art to which this disclosure pertains having the benefit of the teachings presented in the foregoing description and the associated drawings. Therefore, it is to be understood that the embodiments are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

The term "or" is used herein in both the alternative and conjunctive sense, unless otherwise indicated. Terms such as "computing," "determining," "generating," and/or similar words are used herein interchangeably to refer to the creation, modification, or identification of data. Further, "based on," "based on in part on," "based at least on," "based upon," and/or similar words are used herein interchangeably in an open-ended manner such that they do not indicate being based only on or based solely on the referenced element or elements unless so indicated. Like numbers refer to like elements throughout.

As used herein, the term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of.

The phrases "in one embodiment," "according to one embodiment," "in some embodiments," and the like generally mean that the particular feature, structure, or characteristic following the phrase may be included in at least one embodiment of the present disclosure, and may be included in more than one embodiment of the present disclosure (importantly, such phrases do not necessarily refer to the same embodiment).

The word "example" or "exemplary" is used herein to mean "serving as an example, instance, or illustration." Any implementation described herein as "exemplary" is not necessarily to be construed as preferred or advantageous over other implementations.

If the specification states a component or feature "may," "can," "could," "should," "would," "preferably," "possibly," "typically," "optionally," "for example," "often," or "might" (or other such language) be included or have a characteristic, that a specific component or feature is not required to be included or to have the characteristic. Such a component or feature may be optionally included in some embodiments, or it may be excluded.

The term "industrial plant," "plant," and/or similar terms used herein interchangeably may refer to one or more buildings, complex, or arrangement of components that perform a chemical, physical, electrical, mechanical process, and/or the like for converting input materials into one or more output products. Non-limiting examples of an industrial plant include a chemical industrial plant, automotive manufacturing plant, distillery, oil refinery, fabric manufacturing plant, and/or the like.

The term "physical component" with respect to an industrial plant may refer to asset(s) within or associated with the industrial plant. Such assets, for example, may include real-world equipment, systems, or other physical structures within and/or associated with the industrial plant, and that is utilized by the industrial plant. For example, a physical component with respect to an industrial plant may comprise equipment, systems, or other structures that are utilized in a process performed by the industrial plant. In an example context of an oil refinery, non-limiting examples of a physical component may include a furnace, a pump, a heat exchanger, a distillation column, and/or the like.

The term "process simulation model," which may also be termed an "asset model," refers to a model-based representation of one or more processes of an industrial plant. A process simulation model may be configured to facilitate designing, developing, analyzing, monitoring, controlling, optimizing, and/or the like one or more processes of the industrial plant. Such processes for example, may include chemical processes, biological processes, and/or the like. In one or more embodiments, a process simulation model embodies a flowsheet that describes the process flow through an industrial plant. A non-limiting example of a process simulation model is a first principle-based simulation model that models equipment and/or processes based on fundamental laws of physics, thermodynamics, kinetics, chemistry, etc. For example, a feed stream associated with a gas refrigeration plant may be defined in a process simulation model in terms of its physical and/or chemical properties. As another example, a feed stream associated with a crude oil processing plant may be defined in a process simulation model in terms of its physical and/or chemical properties. One or more inputs to a process simulation model may be fixed input(s), while one or more inputs to the process simulation model may be variable input(s). Additionally or alternatively, one or more inputs to the process simulation model may be a computed value, for example, by the process simulation model. Additionally or alternatively, one or more inputs to the process simulation model may comprise data received from the plant. As a non-limiting example, such data received from the plant may comprise equipment and/or process variable measurements (e.g., sensor-based measurements). In one or more embodiments, execution of a process simulation model includes performing one or more operations. As a non-limiting example, the one or more operations may include an optimization operation with respect to one or more objective functions (e.g., minimum energy, maximum production, maximum profit, minimum cost, and/or the like) in order to determine optimal operating points/conditions for specified parameter(s). An optimal operating point/condition for a specified parameter, for example, may describe a stable operating point/condition for the specified parameter. In some embodiments, a process simulation model may comprise a steady-state model or a dynamic model. For example, in some embodiments a process simulation model may simulate a steady state process and/or a dynamic process. In some embodiments, a process simulation model may be associated with or otherwise embodied by a digital twin model.

A process simulation model may include hundreds or thousands of assets, and one or more "attributes" may be associated with each asset. The attributes define a particular feature or value related to the asset. The attributes may comprise, for example, raw data values that are measured in the plant, such as temperature and flow; values that are used for calculations within the model, such as conversion factors or constants; the results of intermediate or final calculations; or simulation or optimization results.

A "flowsheet" is a graphic representation of a process flow through an industrial plant. A process simulation model is often created from a flowsheet. A flowsheet often includes or is linked to one or more "process data tables." A flowsheet may include one or more input data tables defining the inputs to the process simulation model and one or more output data tables defining the outputs from the process simulation model. A flowsheet may include a source data table that indicates which variables from the industrial plant should be mapped to which inputs.

A process simulation model may rely on a "time-series database" (TSDB), and such a TSDB is often created as part of creating a process simulation model. Many, if not most, of the attribute values of a process simulation model change over time. Such a TSDB records the values of the attributes at different times. Depending on the state of the plant and the process models, the time intervals at which the attributes are recorded may vary.

A "digital twin model," "process digital twin," "process digital twin system," and the like refers to a digital, model-based representation of physical components (e.g., equipment, system, processes, etc.) in operation. In one or more embodiments, a digital twin model is configured to run with plant data in that incoming data (e.g., operational data) from the plant is fed into the digital twin model to update the model. As such, a digital twin model may describe a representation of equipment and/or processes of an industrial plant that reflects the current operating conditions. A digital twin model may be used to monitor, refine, control, predict, and/or optimize operations of the industrial plant. In some embodiments, the digital twin model may comprise one or more process simulation models and/or one or more data-driven models.

Various embodiments of the present disclosure address technical challenges related to creating a process simulation model and corresponding time-series database. Specifically, embodiments of the present disclosure enable automatically generating a process simulation model and a corresponding time-series database (which may also be termed a process simulation model database). Embodiments of the present disclosure receive a flowsheet defining a process or subprocess within the industrial environment and one or more assets of the process, each asset having an asset type. In some embodiments, the assets of the process or subprocess include one or more of equipment, streams, measurement instruments, calculated values, inputs and/or outputs. Embodiments of the present disclosure also receive one or more process data tables (which may also be termed process flow tables) comprising the assets from the flowsheet that are to be included in the process simulation model. In some embodiments, the flowsheet and/or process data tables comprise a plurality of variables such as measured values, calculated values, parameters, and/or specifications, and the plurality of variables comprise associated engineering units for one or more of the measured values, calculated values, parameters, and/or specifications.

Embodiments of the present disclosure use one or more predefined attributes to generate the process simulation model and corresponding time-series database. In some embodiments, at least some of the one or more predefined attributes enable preprocessing calculations, postprocessing calculations, storing inputs to the preprocessing and/or postprocessing calculations, storing results from the preprocessing and/or postprocessing calculations, measurement values from the industrial environment, parameter values to support the preprocessing and/or postprocessing calculations, and/or simulation results.

After the process simulation model and corresponding time-series database are created, a process digital twin may be generated and displayed.

Embodiments of the present disclosure herein include systems, apparatuses, methods, and computer program products that enable automatic generation of a process simulation model and associated time-series database. It should be readily appreciated that the embodiments of the apparatus, systems, methods, and computer program product described herein may be configured in various additional and alternative manners in addition to those expressly described herein.

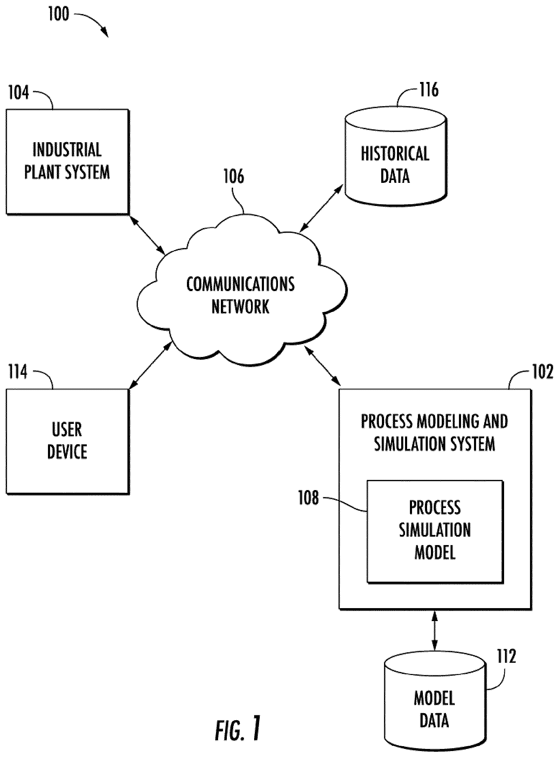

FIG. 1 illustrates a block diagram of an environment/system 100 in which embodiments of the present disclosure may operate. Specifically, FIG. 1 illustrates an industrial plant system 104 system in communication with a process modeling and simulation system 102. In some embodiments, the industrial plant system 104 communicates with the process modeling and simulation system 102 over one or more communication network(s), for example a communications network 106. In some embodiments, the industrial plant system 104 is in communication with a plurality of plant systems, each identically or similarly configured to the industrial plant system 104. In some such embodiments, the process modeling and simulation system 102 may process data associated with each industrial plant system 104 independently, and/or in some contexts processes data associated with multiple industrial plant systems 104 in the aggregate (e.g., when processing all industrial plant systems 104 associated with a particular entity, region, and/or the like). In some embodiments, the process modeling and simulation system 102 includes one or more process simulation models 108. The one or more process simulation models may at least in part represent a digital twin model. For example, in some embodiments, the process modeling and simulation system 102 may comprise a digital twin model that is the process simulation model 108 or may comprise a digital twin model that includes one or more process simulation models 108 and/or one or more data-driven models. As depicted in FIG. 1, in some embodiments, the process modeling and simulation system 102 includes one or more process simulation models 108. As further depicted in FIG. 1, in some embodiments, the process modeling and simulation system 102 includes a model data storage system 112 that may be external (as illustrated) or internal to the process modeling and simulation system 102. For example, the model data storage system 112 may be comprise a part of a separate system in communication with the process modeling and simulation system 102 (e.g., via the communications network 106).

As depicted in FIG. 1, in some embodiments, the process modeling and simulation system 102 may be in communication with a historical data storage system 116 that may be external (as illustrated) or internal to the process modeling and simulation system 102. For example, the historical data storage system 116 may be a part of a separate system in communication with the process modeling and simulation system 102 (e.g., via the communications network 106). In some embodiments, the historical data storage system 116 comprises a cloud historian collector (CHC) that uses a Laboratory Information Management System (LIMS) database that stores historical values for one or more of the asset attribute values from the industrial plant system 104.

As depicted in FIG. 1, in some embodiments, the process modeling and simulation system 102 may be in communication with a user device 114 that may be external (as illustrated) or internal to the process modeling and simulation system 102. In some embodiments, the user device 114 enables a user to create and interact with a process simulation model.

It should be appreciated that the communications network 106 in some embodiments is embodied in any of a myriad of network configurations. In some embodiments, the communications network 106 embodies a public network (e.g., the Internet). In some embodiments, the communications network 106 embodies a private network (e.g., an internal localized, or closed-off network between particular devices). In some other embodiments, the communications network 106 embodies a hybrid network (e.g., a network enabling internal communications between particular connected devices and external communications with other devices). The communications network 106 in some embodiments includes one or more base station(s), relay(s), router(s), switch(es), cell tower(s), communications cable(s) and/or associated routing station(s), and/or the like. In some embodiments, the communications network 106 includes one or more user controlled computing device(s) (e.g., a user owned router and/or modem) and/or one or more external utility devices (e.g., Internet service provider communication tower(s) and/or other device(s)).

In some embodiments, each of the components of the system 100 communicatively are coupled to transmit data to and/or receive data from one another over the same or different wireless and/or wired networks embodying the communications network 106. Such configuration(s) include, without limitation, a wired or wireless Personal Area Network (PAN), Local Area Network (LAN), Metropolitan Area Network (MAN), Wide Area Network (WAN), and/or the like. Additionally, while FIG. 1 illustrate certain system entities as separate, standalone entities communicating over the communications network 106, the various embodiments are not limited to this architecture. In other embodiments, one or more computing entities share one or more components, hardware, and/or the like, or otherwise are embodied by a single computing device such that connection(s) between the computing entities are over the communications network 106 are altered and/or rendered unnecessary. For example, in some embodiments, the industrial plant system 104 includes some or all of the process modeling and simulation system 102, such that an external communications network 106 is not required.

In some embodiments, the industrial plant system 104 and the process modeling and simulation system 102 are embodied in an on-premises system within or associated with the industrial plant. In some such embodiments, the industrial plant system 104 and the process modeling and simulation system 102 are communicatively coupled via at least one wired connection. Alternatively or additionally, in some embodiments, the industrial plant system 104 embodies or includes the process modeling and simulation system 102, for example as a software component of a single enterprise terminal.

The industrial plant system 104 includes any number of computing device(s), system(s), physical component(s), and/or the like, that facilitates producing of any number of products, for example utilizing particular configurations that cause processing of particular inputs available within the industrial plant system 104. In some embodiments, the industrial plant system 104 includes one or more physical component(s), connection(s) between physical component(s), and/or computing system(s) that control operation of each physical component therein. In some embodiments, a physical component describes asset(s) within or associated with an industrial plant. Such assets, for example, may include real-world equipment, systems, or other physical structures within and/or associated with the industrial plant, and that is utilized by the industrial plant. For example, a physical component with respect to an industrial plant may comprise equipment, systems, or other structures that are utilized in a process performed by the industrial plant. In an example context of an oil refinery plant, non-limiting examples of a physical component may include a furnace, a pump, a heat exchanger, and/or the like. The industrial plant system 104, for example, can embody an oil refinery, an automotive engine manufacturing plant, a distillery, and/or the like, which includes physical component(s) that perform particular process(es) to alter properties of inputs to the component(s). Additionally or alternatively, in some embodiments the industrial plant system 104 includes one or more computing system(s) that are specially configured to operate the physical component(s) in a manner that produces one or more particular product(s) simultaneously. In some embodiments, an industrial plant system 104 includes one or more computing device(s) and/or system(s) embodied in hardware, software, firmware, and/or a combination thereof, that configure and/or otherwise control operation of one or more physical component(s) in the corresponding industrial plant(s). For example, in some embodiments, such computing device(s) and/or system(s) include one or more programmable logic controller(s), MPC(s), application server(s), centralized control system(s), and/or the like, that control(s) configuration and/or operation of at least one physical component. It will be appreciated that different industrial plant system(s) may include or otherwise be associated with different physical component(s), computing system(s), and/or the like.

The process modeling and simulation system 102 includes one or more computing device(s) and/or system(s) embodied in hardware, software, firmware, and/or a combination thereof, that can model and/or simulate process(es) associated with an industrial plant. In some embodiments, the process modeling and simulation system 102 includes one or more specially configured application server(s), database server(s), end user device(s), cloud computing system(s), and/or the like. Additionally or alternatively, in some embodiments, the process modeling and simulation system 102 includes one or more user device(s) that enables access to functionality provided by the process modeling and simulation system 102, for example via a web application, native application, and/or the like. For example, in some embodiments, the process modeling and simulation system 102 provides cloud-based functionality to an end-user that facilitates cloud-based monitoring, controlling, optimization, etc., of an industrial plant system, such as industrial plant system 104

The process modeling and simulation system 102 can be used for, for example, designing, analyzing, monitoring, controlling, and/or optimizing an industrial plant. In one or more embodiments, the process modeling and simulation system 102 is configured to output data that reflects optimal operating points/conditions for one or more specified parameters associated with an equipment and/or process of an industrial plant, such as an industrial plant embodied by the industrial plant system 104. For example, the process modeling and simulation system 102, can be configured to perform, based at least in part on input data associated with the industrial plant, one or more modeling operations and/or simulation operations that facilitates generation of model-predicted data, wherein the model predicted prediction(s) may be used to facilitate designing, analyzing, monitoring, controlling, and/or optimizing equipment and/or process(es) of an industrial plant. In some embodiments, the process modeling and simulation system 102 includes one or more application server(s) and/or database server(s) that provide such functionality. Additionally or alternatively, in some embodiments, the process modeling and simulation system 102 includes one or more client device(s), user device(s), and/or the like, such as user device 114, that enable access to the functionality provided via the process modeling and simulation system 102, for example via a web application, a native application, and/or the like executed on the client device. In some embodiments, the process modeling and simulation system 102 includes or embodies a display or other user interface to which a user-facing interface is renderable.

In some embodiments, the process modeling and simulation system 102 and industrial plant system 104 communicate with one another to perform the various actions described herein. For example, in some embodiments, the process modeling and simulation system 102 and the industrial plant system 104 communicate in order to generate model-predicted data associated with operation of the industrial plant (e.g., embodied by the industrial plant system 104). Additionally or alternatively, in some embodiments, the process modeling and simulation system 102 and the industrial plant system 104 communicate to facilitate control or adjustment of operation of physical component(s) in the industrial plants based at least in part on the generated model-predicted data. For example, in some embodiments the process modeling and simulation system 102 and the industrial plant system 104 can communicate to automatically configure or reconfigure one or more physical component(s) of the industrial plant based on the model-predicted data. In some embodiments, the process modeling and simulation system 102 includes a process simulation model 108. In some embodiments, the process modeling and simulation system 102 includes a plurality of process simulation models 108.

In some embodiments, a process simulation model 108 is a model-based representation of one or more assets of an industrial plant (e.g., industrial plant embodied by the industrial plant system 104). A process simulation model 108 may comprise one or more asset models, that each represent an asset associated with the industrial plant system 104. An asset may include equipment and/or processes associated with the industrial plant system 104 (e.g., industrial plant thereof) and/or their units. One or more inputs to process simulation model 108 may be fixed input(s), while one or more inputs to process simulation model 108 may be variable input(s). Additionally or alternatively, one or more inputs to the process simulation model may be a computed value. In one or more embodiments, an input to the process simulation model 108 that is a computed value is determined (e.g., computed) by the process simulation model 108 embodied by the process modeling and simulation system 102. Additionally or alternatively, one or more inputs to the process simulation model may comprise data received from the industrial plant system 104. Such data (e.g., plant data) may comprise operational data received from the plant, such as process variable measurements and/or equipment variable measurements. In an example context, one or more equipment and/or processes associated with the industrial plant system 104 may include sensor devices for measuring certain variables (e.g., temperature, pressure, etc.) with respect to the equipment and/or processes. In some embodiments, a particular process simulation model 108 may be a first principle-based simulation model that models equipment and/or processes based on fundamental laws of physics, thermodynamics, kinetics, chemistry, etc. For example, a feed stream associated with a gas refrigeration plant, or a crude oil processing plant may be defined in the process simulation model 108 in terms of its physical and/or chemical properties. Additionally or alternatively, one or more inputs to the process simulation model may comprise historical data related to the industrial plant system 104, such as from a historical data storage system 116. Such historical data may comprise operational data, such as process variable measurements and/or equipment variable measurements, captured from the plant over a prior predetermined time period.

In one or more embodiments, process simulation model 108 can implement an algorithm based on inter-related asset models for the industrial plant (e.g., embodied by the industrial plant system 104) to model and/or simulate assets of the plant, and to generate prediction(s). In some embodiments, prediction(s) may comprise model-predicted data that represent or otherwise reflect predicted plant performance, comparison of current plant performance against historical plant performance to detect changes associated with operation of the plant such as changes in equipment and/or process(es). Additionally or alternatively, the model-predicted data may comprise data indicative of operating points/condition(s) for one or more equipment and/or process variables. In one or more embodiments, process simulation model 108 may facilitate designing, developing, analyzing, monitoring, controlling, optimizing, and/or the like of one or more equipment and/or processes of the industrial plant. Such processes, for example, may include chemical processes, biological processes, and/or the like. In one or more embodiments, process simulation model 108 embodies a flowsheet that describes the process flow through the industrial plant.

In one or more embodiments the process modeling and simulation system 102 and/or the process simulation model 108 may represent a digital twin (e.g., digital twin model) with respect to an industrial plant embodied by the industrial plant system 104. For example, as described above, in one or more embodiments, the process simulation model 108 is a digital twin model of one or more processes of the industrial plant. For example, in some examples, the process modeling and simulation system 102 comprises a digital twin model that is a process simulation model 108. In some examples, the process modeling and simulation system 102 comprises a digital twin model that includes one or more process simulation. A digital twin model with respect to an industrial plant may describe a model-based representation of physical components (e.g., equipment, system, processes, etc.) in operation. The digital twin model (e.g., process simulation model 108 thereof) may be configured to run with plant data in that incoming data from the plant is fed into the digital twin model to update the model. As described above, plant data (e.g., operational data) may include measurements of one or more measured process variables and/or equipment variables. As such, a digital twin model may describe at least in part a representation of equipment and/or processes of an industrial plant that reflects the current operating conditions, and may be used to monitor, refine, control, predict, and/or optimize operations of the industrial plant. Additionally or alternatively, the digital twin model may be used to collect and store various data associated with the operation of the industrial plant.

In one or more embodiments, execution of a process simulation model 108 includes performing one or more operations to output prediction(s) (e.g., model-predicted data) that reflect operation of the industrial plant embodied by the industrial plant system 104, and that in turn can be used for monitoring, controlling, analyzing, and/or optimizing equipment and processes of the industrial plant. As a non-limiting example, the one or more operations may include an optimization operation with respect to one or more optimization objective functions (e.g., minimum energy, maximum production, maximum profit, minimum cost, and/or the like) and/or constraints in order to determine optimal operating points/conditions for specified parameter(s). An optimal operating point/condition for a specified parameter, for example, may describe a stable operating point/condition for the specified parameter. Non-limiting examples of constraints with respect to an optimization operation include physical equipment limits, safe operating limits, product quality specifications, product flows (minimum or maximum limits), energy use, feed availability, and/or the like. In some embodiments, a process simulation model 108 may comprise a steady-state model or a dynamic model in that the process simulation model 108 may be a steady state representation or dynamic representation of process(es) of and industrial plant.

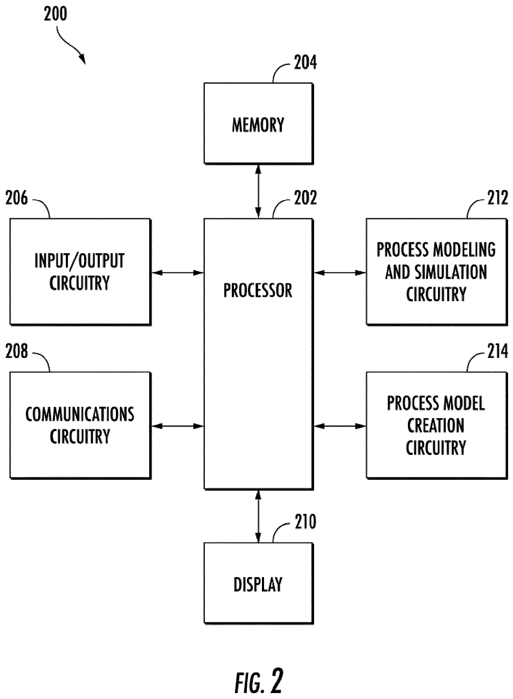

FIG. 2 illustrates a block diagram of an example apparatus that may be specially configured in accordance with an example embodiment of the present disclosure. Specifically, FIG. 2 depicts an example computing apparatus 200 specially configured in accordance with at least some example embodiments of the present disclosure. In some embodiments, the process modeling and simulation system 102, and/or a portion thereof is embodied by one or more system(s), such as the apparatus 200 as depicted and described in FIG. 2. The apparatus 200 includes processor 202, memory 204, input/output circuitry 206, communications circuitry 208, display 210, process modeling and simulation circuitry 212, and process model creation circuitry 214. In some embodiments, the apparatus 200 is configured, using one or more of the sets of circuitry 202-214 to execute and perform the operations described herein.

In general, the terms computing entity (or "entity" in reference other than to a user), device, system, and/or similar words used herein interchangeably may refer to, for example, one or more computers, computing entities, desktop computers, mobile phones, tablets, phablets, notebooks, laptops, distributed systems, items/devices, terminals, servers or server networks, blades, gateways, switches, processing devices, processing entities, set-top boxes, relays, routers, network access points, base stations, the like, and/or any combination of devices or entities adapted to perform the functions, operations, and/or processes described herein. Such functions, operations, and/or processes may include, for example, transmitting, receiving, operating on, processing, displaying, storing, determining, creating/generating, monitoring, evaluating, comparing, and/or similar terms used herein interchangeably. In some embodiments, these functions, operations, and/or processes can be performed on data, content, information, and/or similar terms used herein interchangeably. In this regard, the apparatus 200 embodies a particular, specially configured computing entity transformed to enable the specific operations described herein and provide the specific advantages associated therewith, as described herein.

Although components are described with respect to functional limitations, it should be understood that the particular implementations necessarily include the use of particular computing hardware. It should also be understood that in some embodiments certain of the components described herein include similar or common hardware. For example, in some embodiments two sets of circuitry both leverage use of the same processor(s), network interface(s), storage medium(s), and/or the like, to perform their associated functions, such that duplicate hardware is not required for each set of circuitry. The use of the term "circuitry" as used herein with respect to components of the apparatuses described herein should therefore be understood to include particular hardware configured to perform the functions associated with the particular circuitry as described herein.

Particularly, the term "circuitry" should be understood broadly to include hardware and, in some embodiments, software for configuring the hardware. For example, in some embodiments, "circuitry" includes processing circuitry, storage media, network interfaces, input/output devices, and/or the like. Alternatively or additionally, in some embodiments, other elements of the apparatus 200 provide or supplement the functionality of another particular set of circuitry. For example, the processor 202 in some embodiments provides processing functionality to any of the sets of circuitry, the memory 204 provides storage functionality to any of the sets of circuitry, the communications circuitry 208 provides network interface functionality to any of the sets of circuitry, and/or the like.

In some embodiments, the processor 202 (and/or co-processor or any other processing circuitry assisting or otherwise associated with the processor) is/are in communication with the memory 204 via a bus for passing information among components of the apparatus 200. In some embodiments, for example, the memory 204 is non-transitory and may include, for example, one or more volatile and/or non-volatile memories. In other words, for example, the memory 204 in some embodiments includes or embodies an electronic storage device (e.g., a computer readable storage medium). In some embodiments, the memory 204 is configured to store information, data, content, applications, instructions, or the like, for enabling the apparatus 200 to carry out various functions in accordance with example embodiments of the present disclosure.

The processor 202 may be embodied in a number of different ways. For example, in some example embodiments, the processor 202 includes one or more processing devices configured to perform independently. Additionally or alternatively, in some embodiments, the processor 202 includes one or more processor(s) configured in tandem via a bus to enable independent execution of instructions, pipelining, and/or multithreading. The use of the terms "processor" and "processing circuitry" should be understood to include a single core processor, a multi-core processor, multiple processors internal to the apparatus 200, and/or one or more remote or "cloud" processor(s) external to the apparatus 200.

In an example embodiment, the processor 202 is configured to execute instructions stored in the memory 204 or otherwise accessible to the processor. Alternatively or additionally, the processor 202 in some embodiments is configured to execute hard-coded functionality. As such, whether configured by hardware or software methods, or by a combination thereof, the processor 202 represents an entity (e.g., physically embodied in circuitry) capable of performing operations according to an embodiment of the present disclosure while configured accordingly. Alternatively or additionally, as another example in some example embodiments, when the processor 202 is embodied as an executor of software instructions, the instructions specifically configure the processor 202 to perform the algorithms embodied in the specific operations described herein when such instructions are executed.

As one particular example embodiment, the processor 202 is configured to perform various operations associated with the process simulation model 108. In some embodiments, the processor 202 includes hardware, software, firmware, and/or a combination thereof, for implementing one or more algorithms to model and simulate the execution of defined process(es) within the process simulation model 108, for example, based on inter-related asset models associated with the industrial plant system 104. For example, in some embodiments, the processor 202 includes hardware, software, firmware, and/or a combination thereof, for performing a variety of calculations associated with the process simulation model 108. In some embodiments, the processor 202 can facilitate storing, sending and/or receiving data associated with the execution of the process simulation model 108 among various components of the system 100. For example, in some embodiments, to facilitate integration of the process simulation model 108, various data associated with performing various functionalities of the process simulation model 108 are stored in the model data storage system 112 and accessible to the process simulation model 108. As such, in some embodiments, the process simulation model 108 can store, send, and/or receive data associated with executing the process simulation model 108 utilizing a single repository (e.g., model data storage system 112). In some embodiments, such data may include current live data generated by the industrial plant system 104, current simulated data (e.g., current model-predicted data generated by a process simulation model 108), historical live data, historical simulated data (e.g., historical model-predicted data generated by a process simulation model). It would be appreciated that these are examples, and not intended to be limiting.

In some embodiments, the apparatus 200 includes input/output circuitry 206 that provides output to the user and, in some embodiments, to receive an indication of a user input. In some embodiments, the input/output circuitry 206 is in communication with the processor 202 to provide such functionality. The input/output circuitry 206 may comprise one or more user interface(s) and in some embodiments includes a display 210 that comprises the interface(s) rendered as a web user interface, an application user interface, a user device, a backend system, or the like. In some embodiments, the input/output circuitry 206 also includes a keyboard, a mouse, a joystick, a touch screen, touch areas, soft keys a microphone, a speaker, and/or other input/output mechanisms. In various examples of the present disclosure, the display 210 may include a liquid crystal display (LCD), a light-emitting diode (LED) display, a plasma (PDP) display, a quantum dot (QLED) display, and/or the like. The processor 202 and/or input/output circuitry 206 may be configured to control one or more functions of one or more user interface elements through computer program instructions (e.g., software and/or firmware) stored on a memory accessible to the processor (e.g., memory 204, and/or the like). In some embodiments, the input/output circuitry 206 includes or utilizes a user-facing application to provide input/output functionality to a client device and/or other display associated with a user.

In some embodiments, the apparatus 200 includes communications circuitry 208. The communications circuitry 208 includes any means such as a device or circuitry embodied in either hardware or a combination of hardware and software that is configured to receive and/or transmit data from/to a network and/or any other device, circuitry, or module in communication with the apparatus 200. In this regard, in some embodiments the communications circuitry 208 includes, for example, a network interface for enabling communications with a wired or wireless communications network. Additionally or alternatively in some embodiments, the communications circuitry 208 includes one or more network interface card(s), antenna(s), bus(es), switch(es), router(s), modem(s), and supporting hardware, firmware, and/or software, or any other device suitable for enabling communications via one or more communications network(s). Additionally or alternatively, the communications circuitry 208 includes circuitry for interacting with the antenna(s) and/or other hardware or software to cause transmission of signals via the antenna(s) or to handle receipt of signals received via the antenna(s). In some embodiments, the communications circuitry 208 enables transmission to and/or receipt of data from user device, one or more asset(s) or accompanying sensor(s), and/or other external computing device in communication with the apparatus 200.

In some embodiments, the apparatus 200 includes process modeling and simulation circuitry 212. The process modeling and simulation circuitry 212 includes hardware, software, firmware, and/or a combination thereof, configured to perform various functionalities associated with the process simulation model 108. In some embodiments, the process modeling and simulation circuitry 212 includes hardware, software, firmware, and/or a combination thereof configured to perform a variety of calculations to simulate the execution of defined process(es) associated with the industrial plant system 104. In some embodiments, the process modeling and simulation circuitry 212 is configured to simulate process(es)/equipment conditions based on first-principles modelling.

In some embodiments, the process modeling and simulation circuitry 212 is configured to perform steady-state simulations. In some embodiments, the process modeling and simulation circuitry 212 is configured to perform dynamic simulations. In some embodiments, the process modeling and simulation circuitry 212 includes hardware, software, firmware, and/or a combination thereof, configured to create or receive and maintain flowsheets (e.g., process definition document(s)) which simulate a general flow of plant processes/equipment of the plant embodied by the industrial plant system 104. The flowsheets can define asset models and their associated properties utilized by the process simulation model 108 to perform a simulation of the process. In some embodiments, the flowsheet is configured to model relationships between processes/equipment of the plant. The flowsheet model, for example, may relate individual processing equipment (e.g., pumps, heat exchangers, distillation unit, etc.) to the performance parameters of overall plant process. In some embodiments, the process simulation model 108 is configured perform one or more of its calculations (e.g., implement one or more algorithms) within the flowsheet. In some embodiments, the process modeling and simulation circuitry 212 includes a separate processor, specially configured field programmable gate array (FPGA), or a specially programmed application-specific integrated circuit (ASIC).

In some embodiments, the process modeling and simulation circuitry 212 includes hardware, software, firmware, and/or a combination thereof, configured to receive input data from the model data storage system 112, perform, based on the input data, a variety of calculations to simulate the execution of a defined process(es) associated with the industrial plant system 104, and generate predictions (e.g., model-predicted data) that may be used to, for example, monitor, control, and/or optimize the industrial plant system 104 (e.g., plant thereof). In some of the embodiments, substantially all of the data utilized by the process simulation model 108 to perform its various functionalities is stored in the model data storage system 112.

In some embodiments, the apparatus 200 includes process model creation circuitry 214. The process model creation circuitry 214 includes hardware, software, firmware, and/or a combination thereof, that performs various functionalities associated with creation of a process simulation model, such as the process simulation model 108. For example, process model creation circuitry 214 may implement algorithms to generate process simulation models of an industrial plant system 104. In some embodiments, the process model creation circuitry 214 includes hardware, software, firmware, and/or a combination thereof, that automatically generates a process simulation model 108 and associated time-series database, as described in more detail below.

For example, in some embodiments, the process model creation circuitry 214 includes hardware, software, firmware, and/or a combination thereof, for receiving one or more flowsheets representing a process flow through an industrial plant. The flowsheet may comprise a single page or multiple pages, which may or may not be linked together. The flowsheet may comprise a single layer or multiple layers of varying levels of detail.

In some embodiments, the process model creation circuitry 214 includes hardware, software, firmware, and/or a combination thereof, for receiving one or more process data tables corresponding to the one or more flowsheet. The process data tables may include one or more input data tables defining the inputs to the process simulation model, one or more output data tables defining the outputs from the process simulation model, and/or one or more source data tables that indicate which variables from the industrial plant should be mapped to which inputs in the one or more input data tables.

In some embodiments, the process model creation circuitry 214 includes hardware, software, firmware, and/or a combination thereof, for accessing one or more predefined attributes in the flowsheet(s) and the process data table(s) and for enabling one or more predefined calculations.

In some embodiments, the process model creation circuitry 214 includes hardware, software, firmware, and/or a combination thereof, for receiving historical values for some or all of the asset attribute values from an industrial plant system.

In some embodiments, the process model creation circuitry 214 includes hardware, software, firmware, and/or a combination thereof, for automatically generating a process simulation model and time-series database using the asset information from the flowsheet(s) and the process data table(s) along with the predefined attributes.

In some embodiments, the process model creation circuitry 214 includes hardware, software, firmware, and/or a combination thereof, for automatically generating a process digital twin from the process simulation model and time-series database.

In some embodiments, the process model creation circuitry 214 includes hardware, software, firmware, and/or a combination thereof, for automatically displaying a process digital twin.

Having described example systems, apparatuses, data architectures, and model implementations in accordance with the present disclosure, example processes for automatic generation of a process simulation model and associated time-series database within a process simulation system (such as process modeling and simulation system 102) will now be discussed. It will be appreciated that each of the flowcharts depicts an example computer-implemented process that is performable by one or more of the apparatuses, systems, devices, and/or computer program products described herein, for example utilizing one or more of the specially configured components thereof.

The blocks indicate operations of each process. Such operations may be performed in any of a number of ways, including, without limitation, in the order and manner as depicted and described herein. In some embodiments, one or more blocks of any of the processes described herein occur in-between one or more blocks of another process, before one or more blocks of another process, in parallel with one or more blocks of another process, and/or as a sub-process of a second process. Additionally or alternatively, any of the processes in various embodiments include some or all operational steps described and/or depicted, including one or more optional blocks in some embodiments. With regard to the flowcharts illustrated herein, one or more of the depicted block(s) in some embodiments is/are optional in some, or all, embodiments of the disclosure. Optional blocks are depicted with broken (or "dashed") lines. Similarly, it should be appreciated that one or more of the operations of each flowchart may be combinable, replaceable, and/or otherwise altered as described herein.

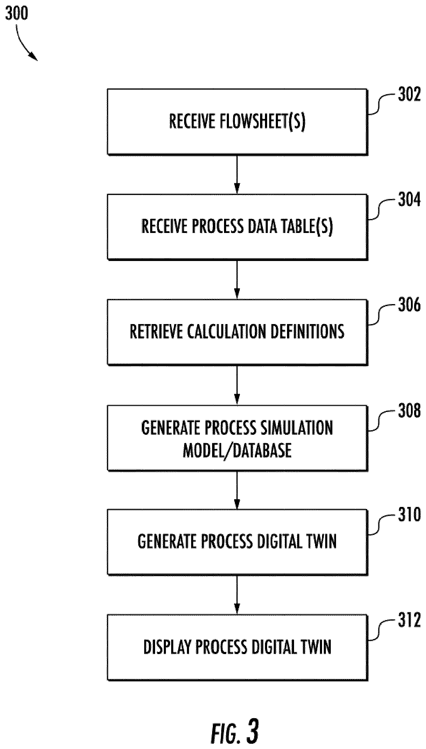

FIG. 3 illustrates a flowchart including example operations of an example process for automatic generation of a process simulation model and associated time-series database within a process simulation system. Specifically, FIG. 3 illustrates an example computer-implemented process 300. In some embodiments, the process 300 is embodied by computer program code stored on a non-transitory computer-readable storage medium of a computer program product configured for execution to perform the process as depicted and described. Alternatively or additionally, in some embodiments, the process 300 is performed by one or more specially configured computing devices, such as the apparatus 200 alone or in communication with one or more other component(s), device(s), system(s), and/or the like. In this regard, in some such embodiments, the apparatus 200 is specially configured by computer-coded instructions (e.g., computer program instructions) stored thereon, for example in the memory 204 and/or another component depicted and/or described herein and/or otherwise accessible to the apparatus 200, for performing the operations as depicted and described. In some embodiments, the apparatus 200 is in communication with one or more external apparatus(es), system(s), device(s), and/or the like, to perform one or more of the operations as depicted and described. For example, the apparatus 200 in some embodiments is in communication with separate physical component(s) of one or more industrial plants, and/or the like. For purposes of simplifying the description, the process 300 is described as performed by and from the perspective of the apparatus 200.

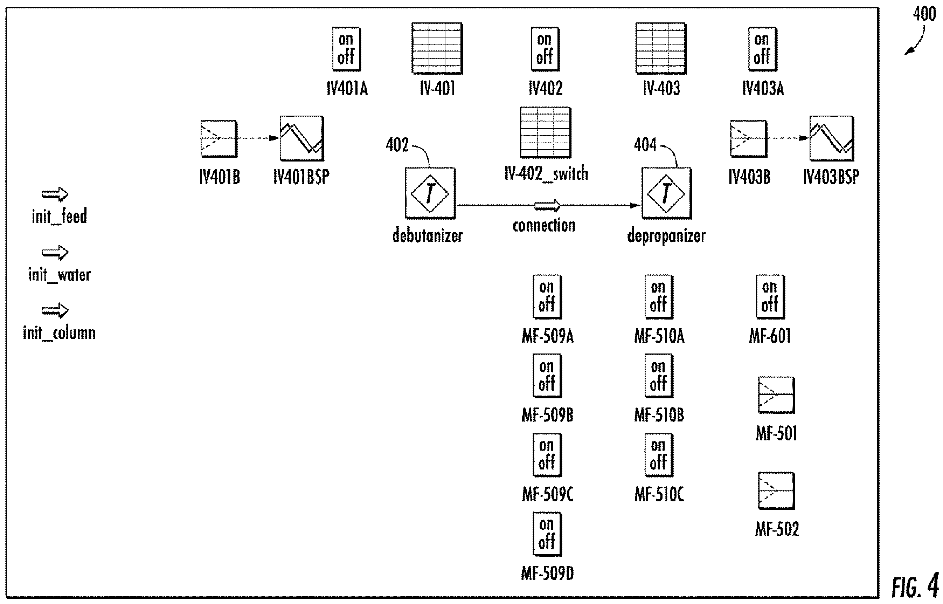

At block 302, a processor (such as, but not limited to, the processor 202 of the apparatus 200 described above in connection with FIG. 2, along with the process model creation circuitry 214) receives a flowsheet that is a graphic representation of a process flow through an industrial plant, such as flowsheet 400 of FIG. 4. In some embodiments, the flowsheet an engineering design flowsheet or a training flowsheet selected by a user to be used to create a process simulation model. As seen in FIG. 4, the flowsheet typically comprises one or more graphical icons representing specific assets and/or processes within the industrial plant. Such flowsheets include a plurality of graphical icons representing, for example, one or more of pumps, heat exchangers, distillation columns, valves, controllers, switches, etc. The example flowsheet 400 of FIG. 4 comprises multiple layers or sub-flowsheets that provide additional details of one or more sub-processes. For example, the example flowsheet 400 of FIG. 4 comprises a debutanizer process sub-flowsheet402 and a depropanizer process sub-flowsheet404. In some embodiments, the user can select, for example, the debutanizer process sub-flowsheet402 to see additional details about the debutanizer process.

Returning to FIG. 3, at block 304, a processor (such as, but not limited to, the processor 202 of the apparatus 200 described above in connection with FIG. 2, along with the process model creation circuitry 214) receives one or more process data tables associated with the flowsheet received at block 302. In some embodiments, one or more input data tables and one or more output data tables are received. The one or more input data tables define the inputs to the process and the one or more output data tables define the outputs of the process. In some embodiments, one or more source data tables are received. The one or more source data tables link the inputs in the one or more input data tables to actual devices (e.g., instruments such as flow meters, pressure meters, temperature sensors, etc.) in the industrial plant.

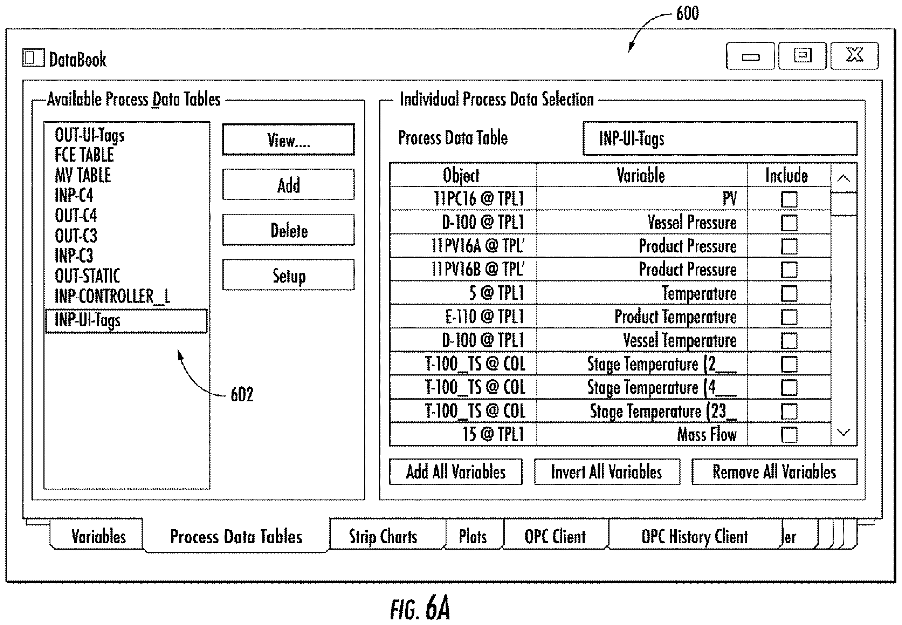

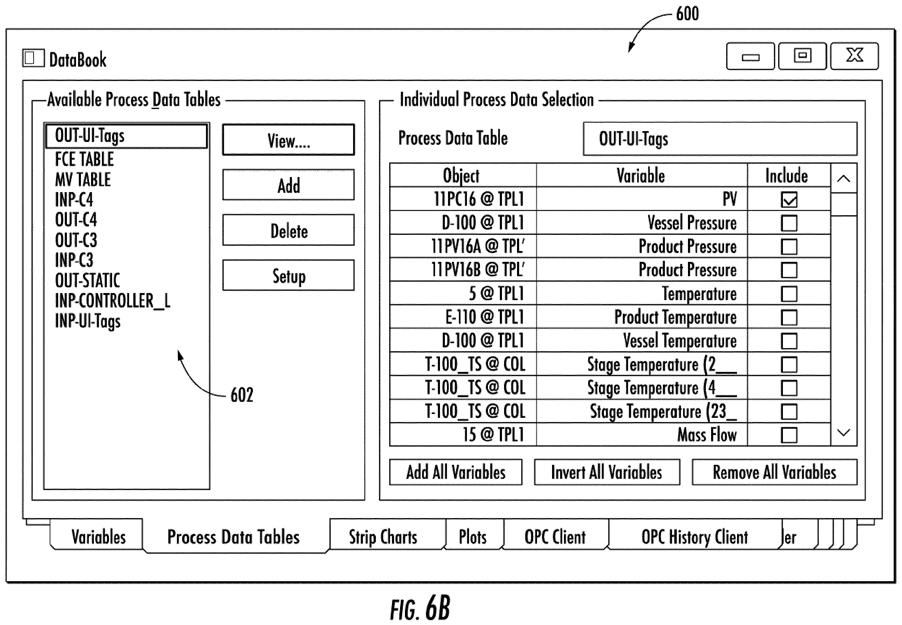

Referring to FIGS. 6A and 6B, in some embodiments a data book 600 is associated with the flowsheet and comprises a listing 602 of the input data table(s) and the output data table(s) associated with the flowsheet. In the example data book 600 of FIGS. 6A and 6B, the flowsheet contains multiple input data tables and multiple output tables . In some embodiments, the type of data table is coded in the name of the data table. For example, in the embodiment illustrated in FIGS. 6A and 6B, the input data table names begin with "INP" and the output data table names begin with "OUT."

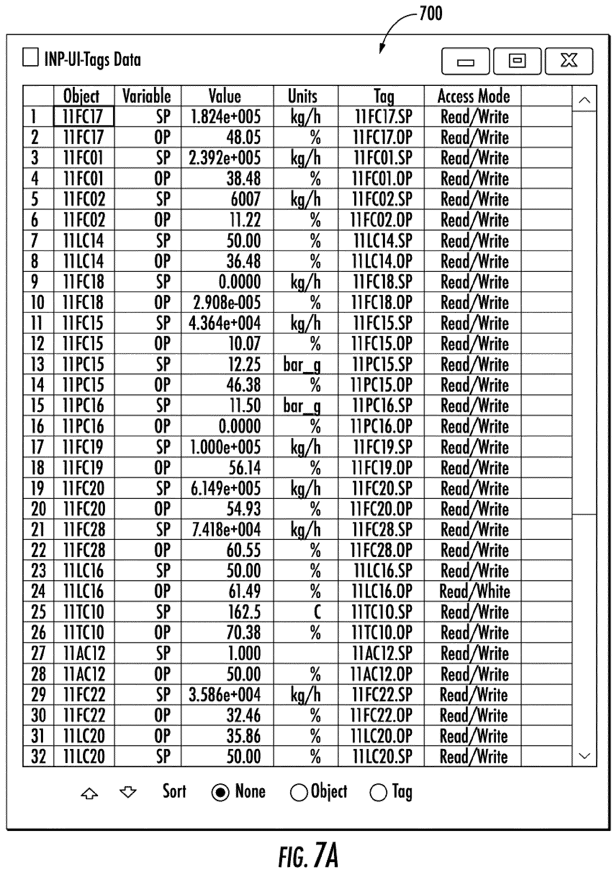

Referring to FIG. 7A, a portion of an example input data table 700 is illustrated. The input data table 700 lists the inputs that are to be used in the process simulation model, which may be a subset of the inputs in the flowsheet. In a typical example embodiment, an input data table is likely to include substantially more inputs than are illustrated in FIG. 7A. The column titled "Object" lists the flowsheet item, e.g, a heat exchanger. Each object contains many data items, e.g., inlet temperature, outlet temperature, etc. The column titled "Variable" lists the specific items connected to the input plant instruments. The column titled "Tag" identifies the database names for the items, In some embodiments, the type of input is coded in the name of the input. In an example embodiment, inputs containing "FC" are flows, inputs containing "LC" are levels, inputs containing "PC" are pressures, and inputs containing "TC" are temperatures. In other embodiments, a separate spreadsheet is used to indicate the types of inputs in the input data table, and each entry in the input data table includes a reference to a specific cell in the separate spreadsheet where the input type indicator resides. In the INP-UI-Tags process data table shown in FIG. 7A, the tag-name refers to the source tag, that is the actual plant instruments from which the inputs come.

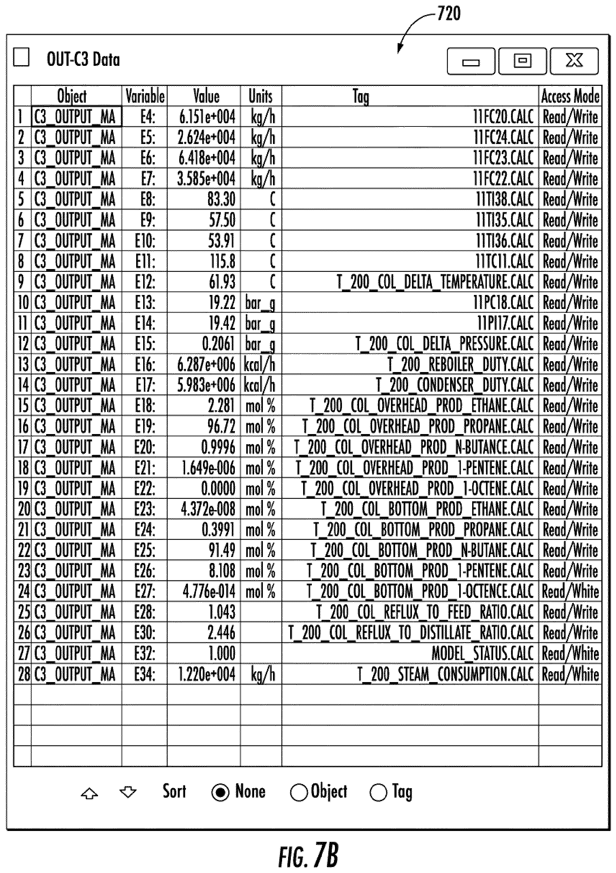

Referring to FIG. 7B, a portion of an example output data table 720 is illustrated. The output data table 720 lists outputs that are to be used in the process simulation model. In a typical example embodiment, an output data table is likely to include substantially more outputs than are illustrated in FIG. 7B. The column titled "Object" lists the flowsheet item, e.g, a heat exchanger. Each object contains many data items, e.g., inlet temperature, outlet temperature, etc. The column titled "Variable" lists the specific items connected to the input plant instruments or exported for information. The column titled "Tag" identifies the database names for the items.,

Although not illustrated, in some embodiments a separate source data table provides links between one or more of the inputs in the input data table to actual plant instruments, thereby indicating the source of the incoming data.

In some embodiments, the flowsheet (such as flowsheet 400 of FIG. 4) is uploaded to a process modeling and simulation system (such as, but not limited to, the process modeling and simulation system 102 described above in connection with FIG. 1), which is able to open the flowsheet and extract the data (e.g., inputs and outputs) from the process data tables. In some embodiments, this extracted data is stored in one or more JavaScript Object Notation (JSON) files and defines part of the process simulation model and time-series database to be generated. In some embodiments, the one or more JSON files are stored in the model data storage system 112.

A process simulation model typically incorporates a plurality of calculations that are used to determine many different interim and final values that are used by the process simulation model. In some embodiments, such calculations may include one or more of validity checking, flow meter correction, mass flow conversion, unit conversion (i.e., convert a value that is expressed in one specific unit of measure to that of a different specific unit of measure), aggregation (e.g., calculating an average value of an attribute over time), steady state detection, mass reconciliation, and anomaly calculation (i.e., comparing inputs to outputs to determine accuracy of model).

In addition to receiving the inputs for the process simulation model from the input data table(s) and the outputs for the process simulation model from the output data table(s), creation of the process simulation model and associated time-series database typically requires identification and definition of the one or more calculations that are to be used in the process simulation model, including definition of the one or more attributes used by the one or more calculations. The one or more attributes used by the one or more calculations may be inputs to the calculations, interim results used by the calculations, or output values from the calculations.

Returning to FIG. 3, at block 306, a processor (such as, but not limited to, the processor 202 of the apparatus 200 described above in connection with FIG. 2, along with the process model creation circuitry 214) retrieves pre-defined definition(s) for the one or more calculations to be used in the process simulation model.

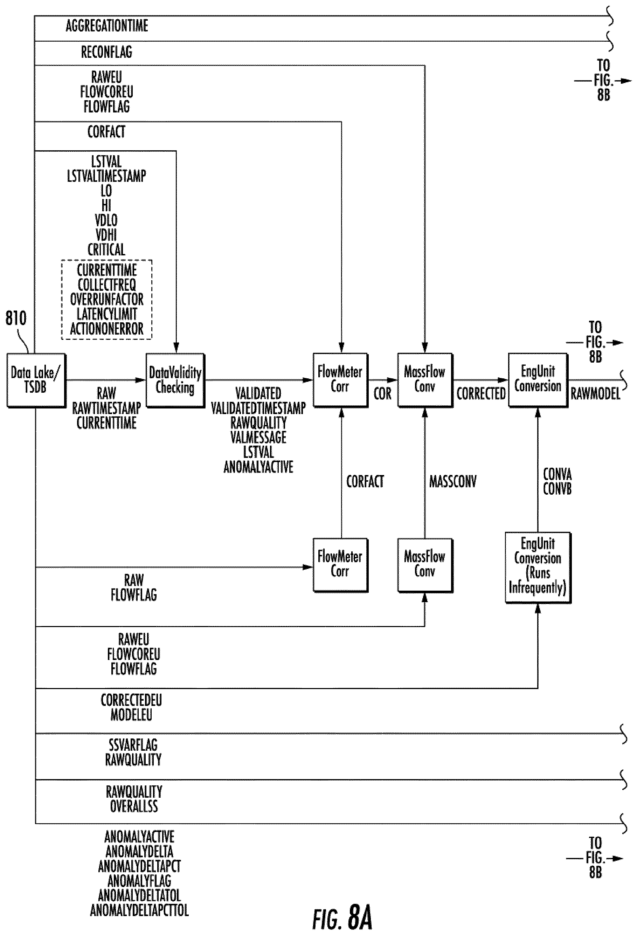

Referring to FIGS. 8A-8E, example definitions for predefined calculations for a process simulation model is illustrated. The information illustrated in FIGS. 8A-8E enables the automatic determination of which attributes need to be included in the process simulation model.

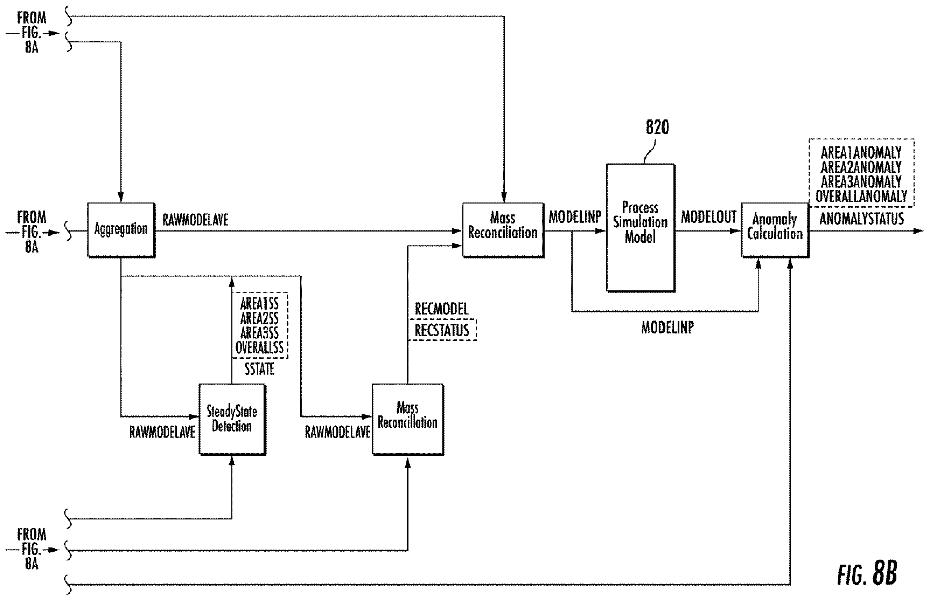

FIGS. 8A and 8B illustrate an example flow diagram of a plurality of possible calculations for a process simulation model. FIGS. 8A and 8B show an example of the attribute structure that is generated to support sample data processing calculations shown in a way to illustrate the flow of data between the calculations. FIGS. 8A and 8B represent one way of graphically illustrating the plurality of possible calculations and the associated attributes for each calculation for purposes of the present disclosure; however, the plurality of possible calculations and the associated attributes for each calculation may be represented for inclusion in a process simulation model in any suitable manner. As seen in FIG. 8B, the inputs from the input data table(s) are termed MODELINP and feed into the process simulation model (when it is generated) 820, while the outputs from the output data table(s) are termed MODELOUT and are output from the process simulation model 820.

The time-series database 810 (when it is generated) is the source for the values of the attributes that are used in the calculations performed (such as by the process modeling and simulation system 102). In some embodiments, one or more calculations may be used in the process simulation model. In some embodiments, one or more (or all) calculations are included by default. In some embodiments, one or more calculations may be included or excluded based on user selection. In the embodiment illustrated in FIGS. 8A and 8B, the calculations are represented by the solid line boxes (without reference numbers), and include validity checking, flow meter correction, mass flow conversion, unit conversion, aggregation, steady state detection, mass reconciliation, and anomaly calculation. The attributes used by each calculation are listed adjacent the lines leading to the respective calculation. For example, the attribute RECONFLAG from the TSDB and the attribute RAWMODEL from the Unit Conversion calculation are used in the Aggregation calculation. The attributes for each calculation include attribute(s) for the input(s) to the calculation, any intermediate results, and the output(s) from the calculation, and the TSDB is generated such that all of these values can be stored at many different times. The attributes in the dashed line boxes are global parameters in that they are not asset specific but are common to all assets in a calculation.

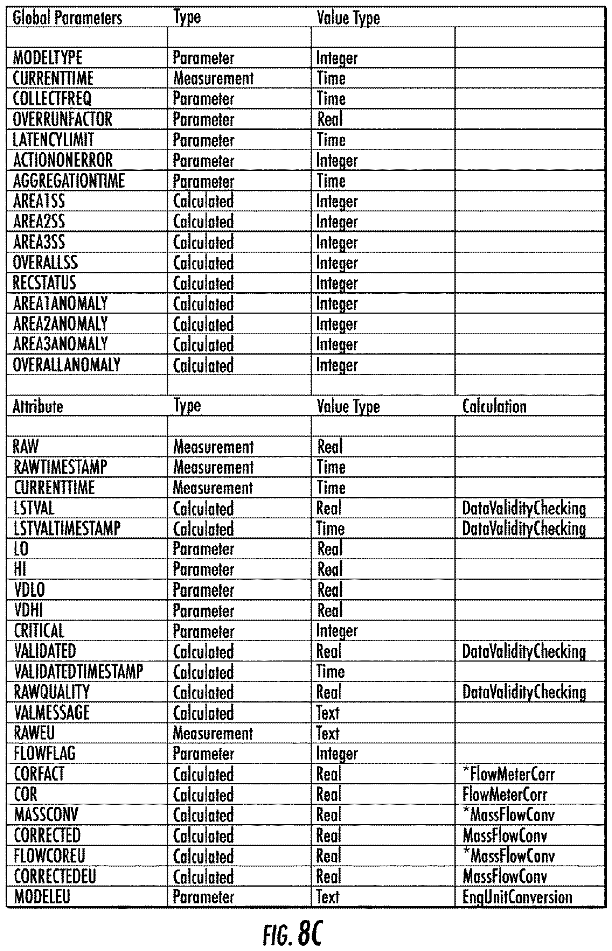

FIG. 8C represents another way of illustrating a plurality of attributes that can be automatically selected for inclusion in a process simulation model. FIG 8C summarizes some of these attributes in tabular form. FIG. 8C illustrates a small portion of possible attributes for one example embodiment. FIG. 8C separates the global (i.e., non-asset-specific) parameters from the attributes that may be associated with one or more assets. In some embodiments, as illustrated in FIG. 8C, each attribute has a corresponding attribute type (e.g., a parameter that can be set, a measurement from an instrument in the plant, or a calculated value), value type (e.g., real number, integer, text, or time), and, for the calculated attributes, reference to the associated calculation. In some embodiments, the calculation column depicts the calculation with which the attribute is associated. In some embodiments, the global parameters are available to be used by any calculation.

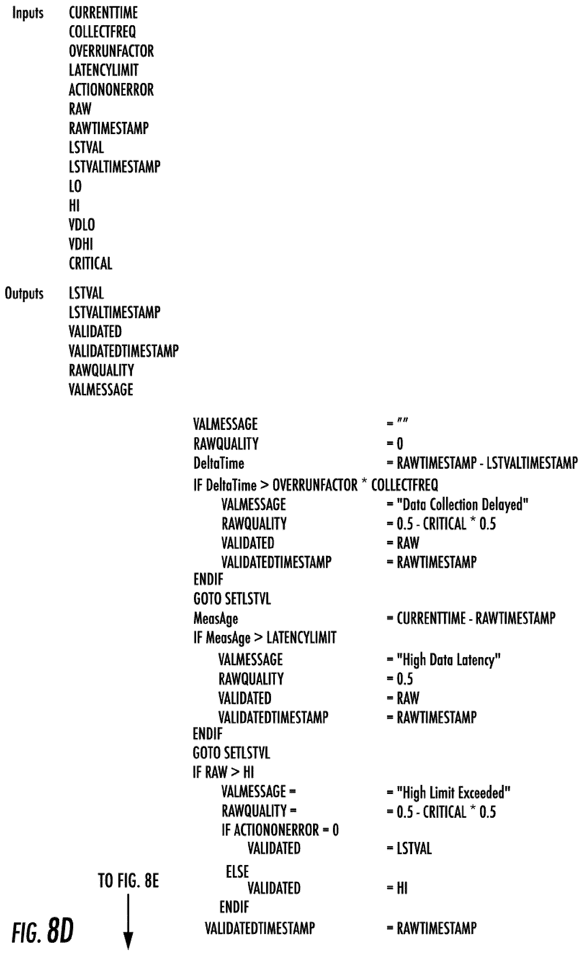

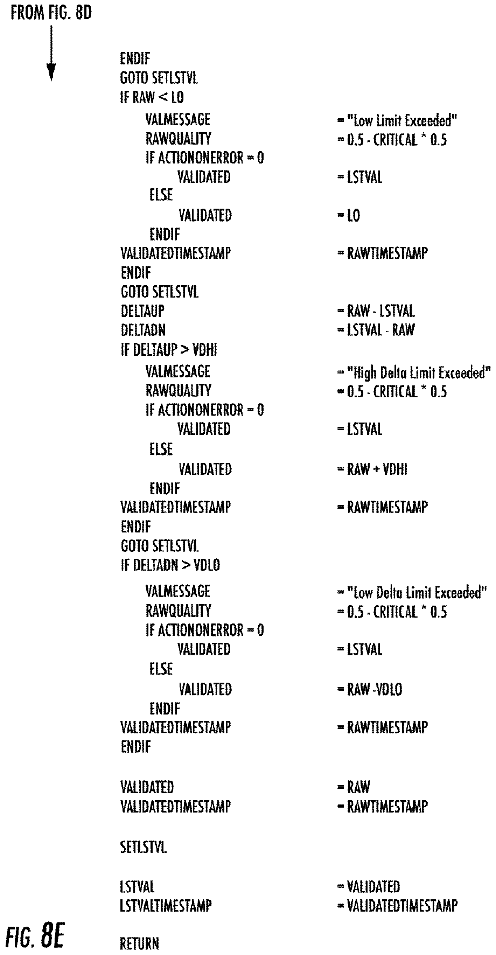

FIGS. 8D and 8E illustrate exemplary attributes and pseudocode for one calculation, specifically validity checking. FIGS. 8D add 8E illustrate an example of a simple data validation calculation that is auto-configured as part of the Asset Model generation. In some embodiments, similar information would be provided for each different calculation that may be incorporated (by default or in response to a user selection) in a process simulation model. The pseudocode represents software code that, in some embodiments, is performed by the process simulation model to perform the calculation. In some embodiments, the software code is written in the Python computer language.

Returning to FIG. 3, at block 308, a processor (such as, but not limited to, the processor 202 of the apparatus 200 described above in connection with FIG. 2, along with the process model creation circuitry 214) automatically generates a process simulation model and associated time-series database. By receiving the definitions for predefined calculations and automatically determining which attributes need to be included in the process simulation model based on the received definitions, along with the flowsheet(s), the input from the input data table(s), and the outputs from the output data table(s), there is sufficient information to automatically cause a process modeling and simulation system to generate a process simulation model and its associated time-series database.

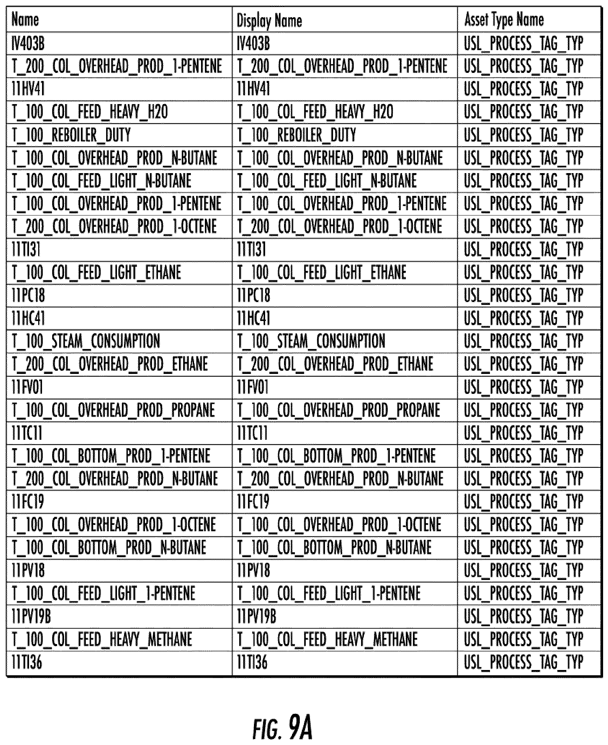

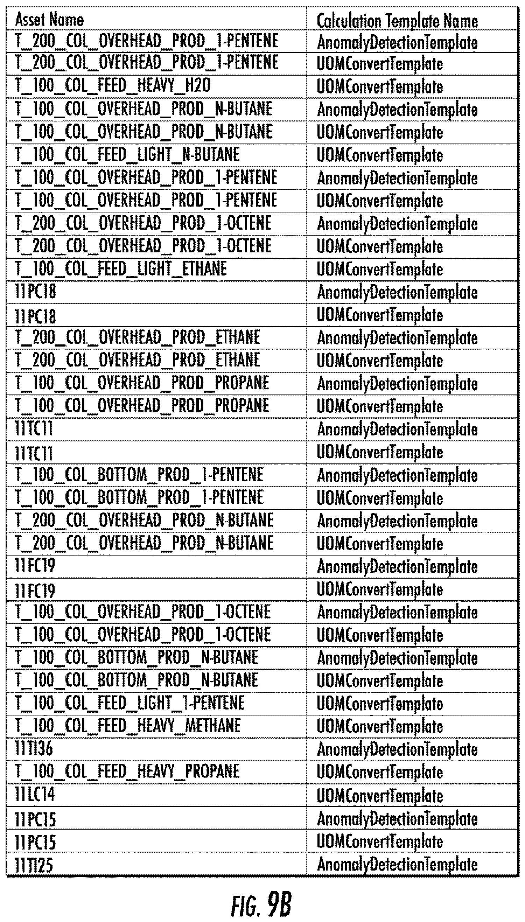

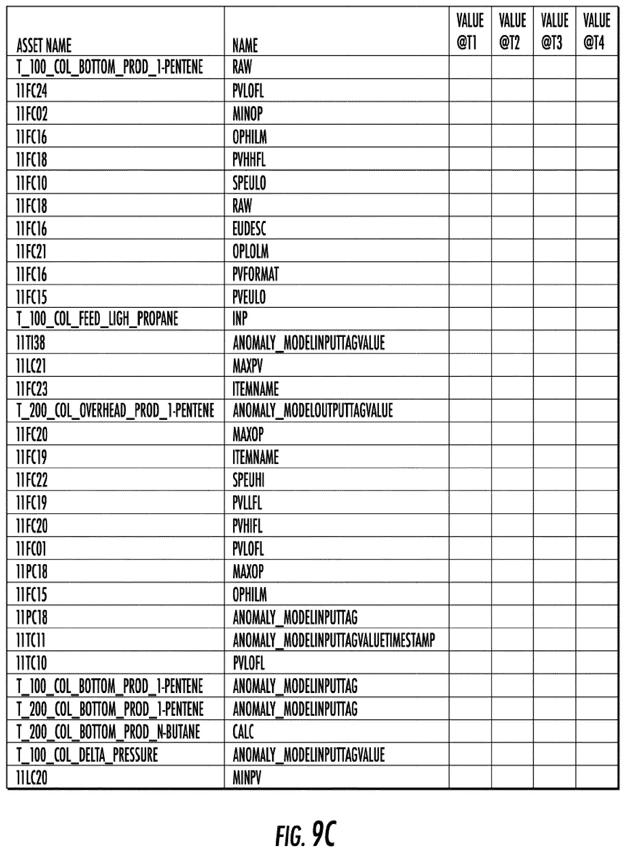

The desired structure of a time-series database for a process simulation model is conventionally known. FIGS. 9A-9C illustrate small portions of an exemplary time-series database presented in spreadsheet format. FIG. 9A illustrates a plurality of assets from the TSDB, along with an associated display name (which may or may not differ) and a name of the asset type. FIG. 9B illustrates a plurality of assets from the TSDB, along with a name of an associated calculation template. FIG. 9C illustrates a plurality of assets from the TSDB, along with an associated attribute name and storage locations for values for each attribute recorded at different times. In the example of FIG. 9C, attribute value storage locations for only four different times (T1 through T4) are illustrated for simplicity. However, a TSDB of embodiments of the disclosure would, over time, likely include attribute values recorded at significantly more times.

Returning to FIG. 3, at block 310, a processor (such as, but not limited to, the processor 202 of the apparatus 200 described above in connection with FIG. 2, along with the process model creation circuitry 214) generates a process digital twin, as is conventionally known, from the previously generated process simulation model and TSDB. As describe above, a digital twin model is configured to incorporate operational plant data and data generated/calculated by the process simulation model. In some embodiments, the process digital twin is generated from the process simulation model and TSDB generated at block 308.

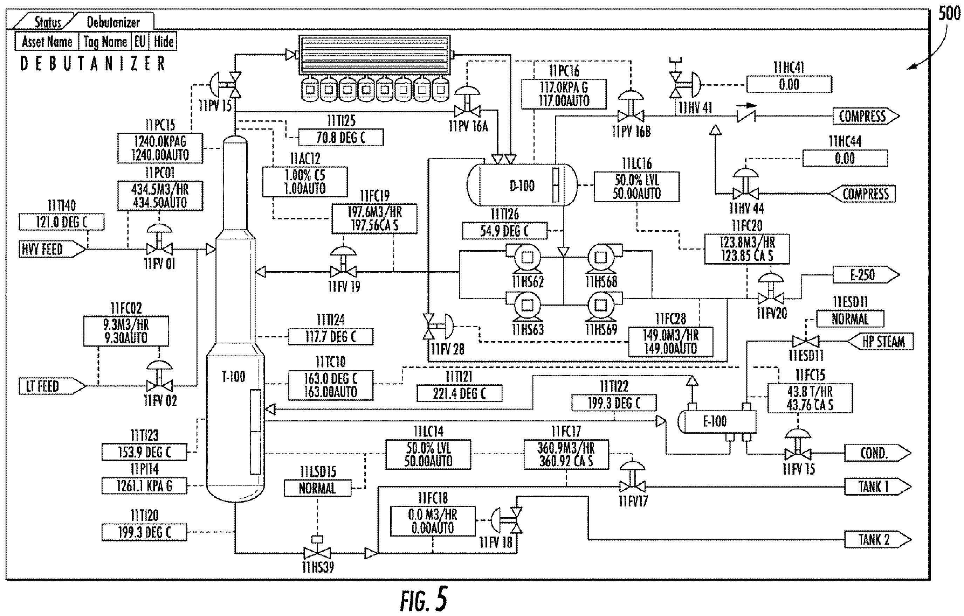

At block 312, a processor (such as, but not limited to, the processor 202 of the apparatus 200 described above in connection with FIG. 2, along with the process model creation circuitry 214) causes the process digital twin to be displayed, such as on display 210 described above in connection with FIG. 2. As is conventionally known, a process digital twin may be displayed as a graphical representation of the process flow diagram and/or may be displayed as tabular data (e.g., data values for a subset of assets/attributes). FIG. 5 illustrates an example graphical representation 500 of the process digital twin of the debutanizer process, including graphical icons representing specific assets within the debutanizer process. The example graphical representation 500 of FIG. 5 comprises a linked page reference 502 that, when selected, enables a user to view another linked graphical representation.

### Conclusion

Although an example processing system has been described above, implementations of the subject matter and the functional operations described herein can be implemented in other types of digital electronic circuitry, or in computer software, firmware, or hardware, including the structures disclosed in this specification and their structural equivalents, or in combinations of one or more of them.

Embodiments of the subject matter and the operations described herein can be implemented in digital electronic circuitry, or in computer software, firmware, or hardware, including the structures disclosed in this specification and their structural equivalents, or in combinations of one or more of them. Embodiments of the subject matter described herein can be implemented as one or more computer programs, i.e., one or more modules of computer program instructions, encoded on computer storage medium for execution by, or to control the operation of, information/data processing apparatus. Alternatively, or in addition, the program instructions can be encoded on an artificially generated propagated signal, e.g., a machine-generated electrical, optical, or electromagnetic signal, which is generated to encode information/data for transmission to suitable receiver apparatus for execution by an information/data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially generated propagated signal. The computer storage medium can also be, or be included in, one or more separate physical components or media (e.g., multiple CDs, disks, or other storage devices).

The operations described herein can be implemented as operations performed by an information/data processing apparatus on information/data stored on one or more computer-readable storage devices or received from other sources.

The term "data processing apparatus" encompasses all kinds of apparatus, devices, and machines for processing data, including by way of example a programmable processor, a computer, a system on a chip, or multiple ones, or combinations, of the foregoing. The apparatus can include special purpose logic circuitry, e.g., an FPGA (field programmable gate array) or an ASIC (application-specific integrated circuit). The apparatus can also include, in addition to hardware, code that creates an execution environment for the computer program in question, e.g., code that constitutes processor firmware, a protocol stack, a repository management system, an operating system, a cross-platform runtime environment, a virtual machine, or a combination of one or more of them. The apparatus and execution environment can realize various different computing model infrastructures, such as web services, distributed computing and grid computing infrastructures.

A computer program (also known as a program, software, software application, script, or code) can be written in any form of programming language, including compiled or interpreted languages, declarative or procedural languages, and it can be deployed in any form, including as a stand-alone program or as a module, component, subroutine, object, or other unit suitable for use in a computing environment. A computer program may, but need not, correspond to a file in a file system. A program can be stored in a portion of a file that holds other programs or information/data (e.g., one or more scripts stored in a markup language document), in a single file dedicated to the program in question, or in multiple coordinated files (e.g., files that store one or more modules, sub-programs, or portions of code). A computer program can be deployed to be executed on one computer or on multiple computers that are located at one site or distributed across multiple sites and interconnected by a communication network.

The processes and logic flows described herein can be performed by one or more programmable processors executing one or more computer programs to perform actions by operating on input information/data and generating output. Processors suitable for the execution of a computer program include, by way of example, both general and special purpose microprocessors, and any one or more processors of any kind of digital computer. Generally, a processor will receive instructions and information/data from a read-only memory or a random access memory or both. The essential elements of a computer are a processor for performing actions in accordance with instructions and one or more memory devices for storing instructions and data. Generally, a computer will also include, or be operatively coupled to receive information/data from or transfer information/data to, or both, one or more mass storage devices for storing data, e.g., magnetic, magneto-optical disks, or optical disks. However, a computer need not have such devices. Devices suitable for storing computer program instructions and information/data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, embodiments of the subject matter described herein can be implemented on a computer having a display device, e.g., a CRT (cathode ray tube) or LCD (liquid crystal display) monitor, for displaying information/data to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments of the subject matter described herein can be implemented in a computing system that includes a back-end component, e.g., as an information/data server, or that includes a middleware component, e.g., an application server, or that includes a front-end component, e.g., a client computer having a graphical user interface or a web browser through which a user can interact with an implementation of the subject matter described herein, or any combination of one or more such back-end, middleware, or front-end components. The components of the system can be interconnected by any form or medium of digital information/data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

The computing system can include clients and servers. A client and server are generally remote from each other and typically interact through a communication network. The relationship of client and server arises by virtue of computer programs running on the respective computers and having a client-server relationship to each other. In some embodiments, a server transmits information/data (e.g., an HTML page) to a client device (e.g., for purposes of displaying information/data to and receiving user input from a user interacting with the client device). Information/data generated at the client device (e.g., a result of the user interaction) can be received from the client device at the server.

While this specification contains many specific implementation details, these should not be construed as limitations on the scope of any disclosures or of what may be claimed, but rather as descriptions of features specific to particular embodiments of particular disclosures. Certain features that are described herein in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described. Other embodiments are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking and parallel processing may be advantageous.

## Claims

1. A computer-implemented method for generating an asset model that digitally represents one or more assets of a process or subprocess within an industrial environment, the method comprising:
receiving a flowsheet defining the process or subprocess within the industrial environment and the one or more assets of the process or subprocess, each asset having an asset type;
receiving a process flow table comprising all or a subset of the one or more assets from the flowsheet to be included in the asset model; and
automatically generating a process simulation model and an associated process simulation model database from the process flow table using one or more predefined attributes for each of one or more predefined calculations.

2. The method of claim 1, further comprising:
automatically generating a process digital twin system from the process simulation model database; and
rendering the process digital twin system to at least one display.

3. The method of claim 1, wherein the one or more assets of the process or subprocess include equipment, streams, measurement instruments, calculated values, inputs and/or outputs.

4. The method of claim 1, wherein the flowsheet comprises a plurality of variables;
wherein the plurality of variables comprise measured values, calculated values, parameters, and/or specifications; and
wherein the plurality of variables comprise associated engineering units for one or more of the measured values, calculated values, parameters, and/or specifications.

5. The method of claim 1, wherein at least some of the one or more predefined attributes enable preprocessing calculations, postprocessing calculations, storing inputs to the preprocessing and/or postprocessing calculations, storing results from the preprocessing and/or postprocessing calculations, measurement values from the industrial environment, parameter values to support the preprocessing and/or postprocessing calculations, and/or simulation results.

6. The method of claim 5, wherein the simulation results include validity checking.

7. The method of claim 1, wherein the process simulation model database is a time-series database comprising values for at least some of the one or more attributes at a plurality of different times.

8. An apparatus for generating an asset model that digitally represents one or more assets of a process or subprocess within an industrial environment, the apparatus comprising at least one processor and at least one non-transitory memory comprising program code, wherein the at least one non-transitory memory and the program code are configured to, with the at least one processor, cause the apparatus to at least:
receive a flowsheet defining the process or subprocess within the industrial environment and the one or more assets of the process or subprocess, each asset having an asset type;
receive a process flow table comprising all or a subset of the one or more assets from the flowsheet to be included in the asset model; and
automatically generate a process simulation model and an associated process simulation model database from the process flow table using one or more predefined attributes for each of one or more predefined calculations.

9. The apparatus of claim 8, wherein the at least one non-transitory memory and the program code are further configured to, with the at least one processor, cause the apparatus to at least:
automatically generate a process digital twin system from the process simulation model database; and
render the process digital twin system to at least one display.

10. The apparatus of claim 8, wherein the one or more assets of the process or subprocess include equipment, streams, measurement instruments, calculated values, inputs and/or outputs.

11. The apparatus of claim 8, wherein the flowsheet comprises a plurality of variables;
wherein the plurality of variables comprise measured values, calculated values, parameters, and/or specifications; and
wherein the plurality of variables comprise associated engineering units for one or more of the measured values, calculated values, parameters, and/or specifications.

12. The apparatus of claim 8, wherein at least some of the one or more predefined attributes enable preprocessing calculations, postprocessing calculations, storing inputs to the preprocessing and/or postprocessing calculations, storing results from the preprocessing and/or postprocessing calculations, measurement values from the industrial environment, parameter values to support the preprocessing and/or postprocessing calculations, and/or simulation results.

13. The apparatus of claim 12, wherein the simulation results include validity checking.

14. The apparatus of claim 8, wherein the process simulation model database is a time-series database comprising values for at least some of the one or more attributes at a plurality of different times.

15. A computer program product for generating an asset model that digitally represents one or more assets of a process or subprocess within an industrial environment, the computer program product comprising at least one non-transitory computer-readable storage medium having computer-readable program code portions stored therein, the computer-readable program code portions comprising an executable portion configured to:
receive a flowsheet defining the process or subprocess within the industrial environment and the one or more assets of the process or subprocess, each asset having an asset type;
receive a process flow table comprising all or a subset of the one or more assets from the flowsheet to be included in the asset model; and
automatically generate a process simulation model and an associated process simulation model database from the process flow table using one or more predefined attributes for each of one or more predefined calculations.
